# EUROPEAN PATENT SPECIFICATION

(11) **EP 2 436 889 B1**
(45) Date of publication and mention of the grant of the patent: **01.03.2017**
(21) Application number: 11183321.6
(22) Date of filing: 29.09.2011
(51) Int. Cl.: F01N 3/022, F01N 3/035, F01N 13/16, B01D 53/94, F01N 3/10

(54) **Exhaust emission control device**
Abgasemissionssteuervorrichtung
Dispositif de contrôle d'émission d'échappement

(30) Priority: 01.10.2010 JP 2010224018
(43) Date of publication of application: 04.04.2012
(73) Proprietor: Mitsubishi Jidosha Kogyo Kabushiki Kaisha, Tokyo 108-8410 (JP)
(72) Inventor: Anoda, Hiroshi, Tokyo, 108-8410 (JP); Tashiro, Keisuke, Tokyo, 108-8410 (JP); Kikuchi, Seiji, Tokyo, 108-8410 (JP); Kawashima, Kazuhito, Tokyo, 108-8410 (JP); Tsuda, Masahiro, Tokyo, 108-8410 (JP)
(74) Representative: Vossius & Partner Patentanwälte Rechtsanwälte mbB

(56) References cited:
- EP-A1- 0 984 142
- WO-A1-2005/113953
- US-A1- 2003 115 859

## Description

The present invention relates to an exhaust emission control device collecting particulate matter contained in exhaust gas from an engine, and removing it by incineration.

One of the known control devices for removing particulate matter (hereinafter referred to as PM) contained in exhaust gas from an engine is a particulate matter collecting device using a filter (diesel particulate filter: hereinafter referred to as DPF). The PM refers to a material that is composed of components of residual fuel and lubricating oil, sulfur compounds, and other impurities adhering to soot composed of carbon. The filter of the DPF has a large number of fine pores having an appropriate size corresponding to the particle diameter of the PM. The PM is collected on the surface of the filter or the inside of the fine pores, and thus, the exhaust gas is cleaned up.

The removing systems for the PM are mainly classified into a mandatory regeneration system and a natural regeneration (continuous regeneration) system depending on its timing of incinerating the PM.

The mandatory regeneration system mandatorily incinerates PM on the filter by an operation for elevating the temperature of the filter. This system is preferably used in a long, continuous running of an engine emitting low-temperature exhaust gas. In contrast, the natural regeneration system steadily incinerates the PM by supplying an oxidant such as nitrogen dioxide (NO₂) to its filter. This system is preferably used for regenerating and cleaning up a filter during the normal running operation of a vehicle.

In order to accelerate the combustion reaction of the PM during the mandatory regeneration or the natural regeneration, a coated DPF has also been developed that has an oxidation catalyst layer provided thereon. The coated oxidation catalyst accelerates the oxidation reaction to elevate the temperature of the filter during the mandatory regeneration and accelerates the generation of oxidants such as NO₂ during the natural regeneration. The oxidation catalyst cleans up not only the PM but also burnable gas components such as carbon monoxide (CO) and hydrocarbons (HCs) contained in the exhaust gas. As described above, a filter coated with an oxidation catalyst exhibits improved cleanup performance of the PM and reduces slip gas.

A filter provided with an oxidation catalyst thereon is disclosed, for example, in JP2007-538192 (Japanese translation of PCT international application No. 2007-538192). In this technique, an adsorbing layer of polycyclic aromatic hydrocarbons (PAHs) is provided on the exhaust-inlet side of the filter while an oxidation coating is provided on the exhaust-outlet side of the filter. The filter can effectively collect PAHs and oxidizes the collected PAHs after the rise of the exhaust temperature.

Some oxidation catalysts to be applied on the filter use noble metals such as platinum and rhodium. The noble metal catalyst has high catalytic activity at relatively low temperature and improves exhaust-cleanup performance. Unfortunately, the noble metal catalyst is expensive and this results in increasing cost of the exhaust-cleanup system.

For example, a filter configuration for cleanup of burnable gas components only on the exhaust-outlet side of the filter, as described in JP2007-538192, requires the oxidation coating to have high oxidation activity in order to reduce the slip gas downstream of the filter. Accordingly, the configuration requires an expensive catalyst such as a noble metal catalyst, and precludes the cost reduction of the exhaust-cleanup system. EP0984142 discloses a catalysed particulate filter with a HC absorbent comprised of at least one of precious metal and transition metal in the inflow cells and a NOx storing member comprised of at least one of precious metal and transition metal in the outflow cells.

An object of the present invention for solving the problems described above is to provide a highly reliable exhaust emission control device that can be produced at low cost and exhibits high oxidation activity.

In addition to this object, the exhaust emission control device has further advantages introduced by each configuration illustrated in preferred embodiments of the invention, which cannot be achieved by the related art.

The object above can be achieved by The features specified in the claims.

An exhaust emission control device of the present invention includes a filter provided on an exhaust path from an engine and that collects particulate matter in exhaust gas; an oxidation catalyst zone provided inside the filter and including a catalyst having oxidation activity to the particulate matter; and a transition metal catalyst zone provided downstream of an exhaust gas flow relative to the oxidation catalyst zone and including a transition metal catalyst.

The transition metal catalyst generally has lower oxidation activity than that of a noble metal catalyst. In contrast, since high-temperature exhaust gas from the oxidation catalyst zone is introduced into the transition metal catalyst zone, the transition metal catalyst zone is constantly maintained at high temperature and exhibits high oxidation activity.

Both the oxidation catalyst zone and the transition metal catalyst zone are disposed in the interior of the same filter.

The filter includes an inlet cell opened toward the upstream side of an exhaust gas flow and an outlet cell opened toward the downstream side of the exhaust gas flow, the oxidation catalyst zone is disposed inside the inlet cell, and the transition metal catalyst zone is disposed inside the outlet cell.

In this case, preferably the filter has a columnar shape, and the inlet cell and the outlet cell are arranged on both sides of a cell wall extending along the axis direction of the filter. That is, the inlet cell and the outlet cell are arranged adjoining each other, while sandwiching a cell wall extending along the axis direction of the filter.

Preferably, the oxidation catalyst zone is formed by coating in the form of a layer along an internal wall of the inlet cell.

Preferably, the oxidation catalyst zone and the transition metal catalyst zone are disposed at positions in consideration of the temperature distribution inside the filter.

Preferably, the transition metal catalyst zone includes a catalyst containing elemental iron or an iron compound.

According to the disclosed exhaust emission control device, the transition metal catalyst zone can be activated by introducing elevated-temperature exhaust gas from the oxidation catalyst zone, and exhibits high oxidation activity at reduced cost. Thus, slip gas from the oxidation catalyst can be cleaned up.

The nature of this invention, as well as other objects and advantages thereof, will be explained in the following with reference to the accompanying drawings, in which like reference characters designate the same or similar parts throughout the figures and wherein:

FIG. 1A is a an entire cross-sectional view of a DPF of an exhaust emission control device;
FIG. 1B is a schematic cross-sectional view of a filter of the exhaust emission control device;
FIG. 2 is a graph illustrating the oxidation activity of exhaust emission control device;
FIG. 3A is a system configuration diagram of a first variation not covered by the wording of the claims;
FIG. 3B is a system configuration diagram of a second variation which is an embodiment of the invention.

An exhaust emission control device will be described with reference to the drawings. The embodiments described below are only exemplification, and application of various modifications and techniques that are not clarified in the following embodiments should not be excluded.

### 1. Configuration

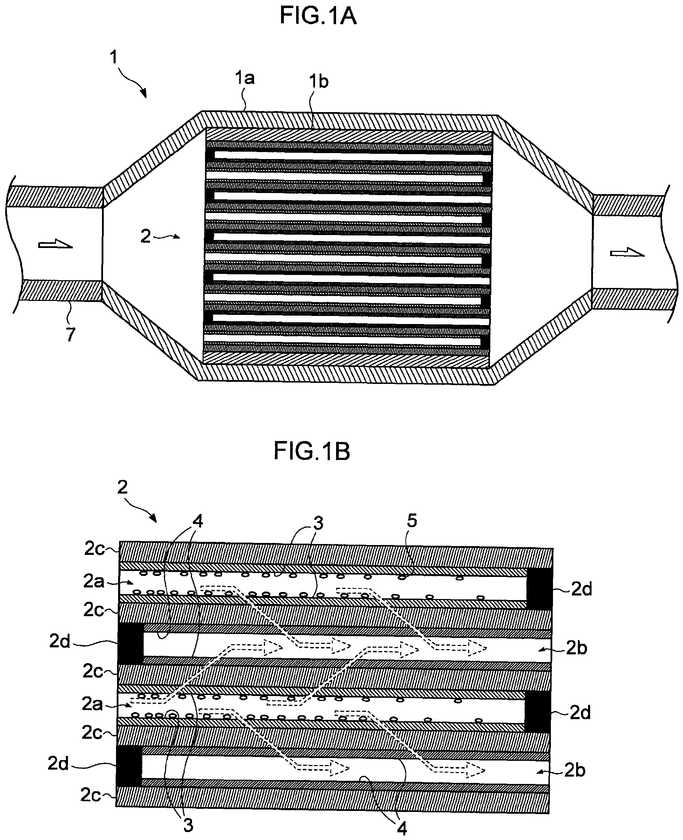

The exhaust emission control device is a DPF 1 disposed on an exhaust path 7 from an engine illustrated in FIG. 1A. The DPF 1 is a filtering device including a filter 2 fixed in a casing 1a, for collecting particulate matter contained in exhaust gas. This filter 2 has a columnar shape, such as a cylindrical shape, or a rectangular column, for example, and is fixed to an inner surface of the casing 1a with a support 1b. In this embodiment, the filter 2 has a cylindrical shape such that the exhaust gas flows along the axis direction of the cylindrical column (from the left to the right in FIG. 1A). Hereinafter, the axis direction is sometimes referred to as "direction of flowing exhaust gas" in this embodiment.

The filter 2 is composed of a porous material (for example, a ceramic filter made of silicon carbide or cordierite). The filter 2 has two functions, i.e., collecting the PM 5 contained in the exhaust gas and removing the collected PM 5 by oxidization. The inside of the filter 2 is divided into a plurality of segments along the direction of the flowing exhaust gas by porous walls, and a large number of fine pores having an appropriate size corresponding to the particle diameter of the PM 5 are formed in the walls. The PM 5 is collected in or on the walls and is filtered out from the exhaust gas when the exhaust gas passes through the vicinity or the inside of the walls.

As illustrated in FIG. 1B, the inside of the filter 2 is divided into a plurality of paths by cell walls 2c. The cell walls 2c extend along the axis direction (direction of flowing exhaust gas) of the filter 2. The space inside the filter 2 divided by each cell wall 2c is called "cell". The cell walls 2c define a lattice in a cross-sectional surface perpendicular to the direction of flowing exhaust gas and cells inside the spaces of the lattice.

Herein, the cross-sectional structure (cross-section perpendicular to the direction of flowing exhaust gas, i.e, cross-section in the radial direction) of the filter 2 will be described. For cell walls 2c having a square lattice shape in the cross-section of the filter 2, each cell has a square shape with four sides surrounded by other cells. For cell walls 2c having a hexagonal lattice shape, each cell has a hexagonal shape or a honeycomb structure with a periphery surrounded by other cells from six directions. The shape of the cell wall 2c in this embodiment has a square lattice shape.

Each cell has a structure called "closed flow type" and its upstream or downstream end is obstructed by seals 2d made of the same material as that of the cell walls 2c.

Hereinafter, the cells having an opening on the upstream side of the exhaust gas flow is called "inlet cells 2a" while the cells having the opening on the downstream side of the exhaust gas flow is called "outlet cells 2b". As illustrated in FIG, 1B, the inlet cells 2a are opened toward upstream of the exhaust gas flow and is closed downstream of the exhaust gas flow by the seal 2d. In contrast, the outlet cells 2b are opened toward downstream of the exhaust gas flow and is closed upstream of the exhaust gas flow by the seal 2d. The inlet cells 2a and the outlet cells 2b are alternately arranged into a square lattice such that the same type of cells does not adjoin each other in the radial cross-section of the filter 2.

In other words, each inlet cell 2a adjoins one or more outlet cells 2b surrounding the cell wall(s) 2c, whereas each outlet cell 2b adjoins one or more inlet cells 2a surrounding the cell wall (s) 2c. The adjoining direction described herein refers to as a direction perpendicular to the exhaust gas flow. For example, the adjoining direction includes an upward direction and a downward direction in FIG. 1B. The adjoining direction also includes a direction perpendicular to the drawing paper of FIG. 1B. All the inlet cells 2a and the outlet cells 2b except the cells in contact with the cylindrical surface of the filter 2 are surrounded by other cells in four directions.

The arrangement of the inlet cells 2a and the outlet cells 2b in the cross-section of the filter 2 can be likened to a pattern of a chessboard. For example, the inlet cells 2a are arranged at positions corresponding to black squares of the chessboard, whereas the outlet cells 2b at positions corresponding to white squares of the chessboard. Each outlet cell 2b is surrounded by four inlet cells 2a in the upper, lower, left, and right directions, and each inlet cell 2a is also surrounded by four outlet cells 2b in the upper and lower, and the left and right directions. As illustrated in FIG. 1B, in a cross-section of the filter 2 cut along the direction of flowing exhaust gas, the inlet cells 2a and the outlet cells 2b are alternately arranged.

In such a structure, the entire exhaust gas enters the inlet cells 2a, passes through a large number of fine pores in the cell walls 2c, and flows out from the outlet cells 2b to the exterior of the filter 2. That is, the entire exhaust gas flows to the downstream side of the filter 2 after passing through the inside of the cell walls 2c, and the PM 5 contained in the exhaust gas is collected on the surface of or in the inside of the cell walls 2c. The flow of the exhaust gas in the filter 2 is indicated by a broken-line arrow in FIG. 1B.

A PM combustion catalyst layer 3 is disposed on the internal walls of each inlet cell 2a, and the transition metal catalyst layer 4 is disposed on the internal walls of each outlet cell 2b. The PM combustion catalyst layer 3 (oxidation catalyst zone) contains a catalyst having oxidation activity to the PM 5. Examples of the catalyst carried thereon include noble metal catalysts (such as platinum and rhodium), ceria-based oxidation catalysts (such as CeO₂ and CeO₂-ZrO₂), and perovskite oxidation catalysts (such as CaMnO₃, LaCoO₃, and LaFeO₃). The PM combustion catalyst layer 3 is preferably composed of a material that has higher oxidation activity than the catalyst contained in the transition metal catalyst layer 4 and that can readily oxidize the PM 5 or burnable gas components (such as HC and CO) .

It is preferable that the PM combustion catalyst layers 3 are formed by coating in the form of a layer along the surfaces of the internal walls of the inlet cells 2a. For example, the coat layer that is little perfused into the cell walls 2c can be formed by drying or firing particulate slurry (catalyst suspension before firing) after filling the inside of the inlet cells 2a with the slurry.

The transition metal catalyst layers 4 (transition metal catalyst zone) contains a transition metal catalyst. The transition metal catalyst layers 4 are formed of a ceramic carrier such as aluminum or silica that carries a transition metal. Examples of the preferred transition metal include elemental iron and iron compounds.

The transition metal catalyst layers 4 may be laminar layers on the surfaces of internal walls of the outlet cells 2b. Alternatively, the transition metal catalyst layers 4 may be formed by perfusing a catalyst into the cell walls 2c. In the case where the transition metal catalyst layers 4 are formed inside the cell walls 2c, the filter 2 is impregnated with an aqueous inorganic metal salt, which acts as a catalyst, and is fired for hydrogen reduction of the metal oxide, for example.

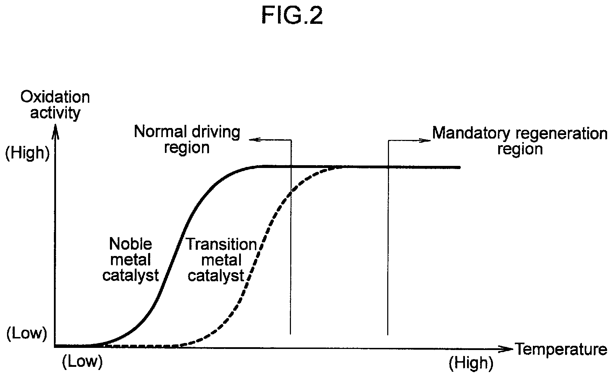

FIG. 2 illustrates oxidation activities of the transition metal catalyst and the noble metal catalyst. The solid-line graph indicates the relationship between the oxidation activity and the temperature of the noble metal catalyst, while the broken-line graph indicates a relationship between the oxidation activity and the temperature of the transition metal catalyst. In a normal driving region at relatively low temperature, the noble metal catalyst has a greater oxidation activity than that of the transition metal catalyst. However, in a mandatory regeneration region at higher temperature than that of the normal driving region, substantially no difference of the oxidation activity is found between the transition metal catalyst and the noble metal catalyst. Accordingly, a sufficiently advantageous effect can be expected even if the transition metal catalyst having relatively low oxidation activity is used for reducing the slip gas (exhaust gas containing CO, HCs, and other impurities) during the mandatory regeneration of the DPF 1. Furthermore, since there is no need to use an expensive noble metal catalyst, the cost of the filter 2 can be reduced.

### 2. Operations and Advantageous Effects

At a relatively low temperature of the exhaust gas in the normal driving region, the burnable gas components such as CO and HCs is oxidized (into, for example, CO₂ or H₂O) by the PM combustion catalyst layers 3 disposed on the upstream side of the exhaust gas flow inside the filter 2, namely on the internal walls of the inlet cells 2a, and thus, the exhaust gas is cleaned up. Furthermore, oxidation of nitrogen monoxide (NO) in the exhaust gas by the PM combustion catalyst layers 3 generates nitrogen dioxide (NO₂) having high activity, which oxidizes PM 5. Accordingly, natural regeneration is performed even at relatively low temperature.

The heat generated by the combustion of the PM 5 and the burnable gas components on the upstream side of the exhaust gas flow of the filter 2 is transmitted (transported, sent) to the downstream side of the exhaust gas flow through the cell walls 2c of the filters 2. Thus, the temperature of the transition metal catalyst layers 4 disposed on the internal walls of the outlet cells 2b are elevated. Consequently, the transition metal catalyst layers 4 are amply activated and oxidation activity of the outlet cells 2b is also enhanced. In other words, even if the burnable gas components flow out toward the outlet cells 2b, the burnable gas components are cleaned up by the transition metal catalyst layers 4. Accordingly, the slip gas downstream of the filter 2 can be reduced.

In contrast, at a relatively high temperature of the exhaust gas in the mandatory regeneration region, carbonaceous components contained in the PM 5 burns by binding with O₂ on the filter 2. In addition, the burnable gas components contained in the exhaust gas is oxidized by the PM combustion catalyst layers 3. The heat generated through these oxidation reactions is transmitted (transported, sent) to the downstream side of the exhaust gas flow. Even if excess burnable gas components are contained in the exhaust gas due to an increased volume of fuel injection or any other cause during the mandatory regeneration, the burnable gas components are also oxidized by the transition metal catalyst layers 4 downstream of the exhaust gas flow at high temperature, and thus, the exhaust gas is cleaned up. Accordingly, in this case, the slip gas downstream of the filter 2 can be also reduced.

Specifically, the DPF 1 overcomes the weak point of the transition metal requiring relatively high temperature for catalytic activity, by arranging the transition metal catalyst layers 4 downstream of the PM combustion catalyst layers 3. In other words, the PM combustion catalyst layers 3 has a new function for elevating the temperature of the transition metal catalyst layers 4 in addition to the existing function for oxidizing the PM 5 and the burnable gas components. Thus, the DPF 1 is advantageous in that the exhaust gas at sufficiently elevated temperature can be introduced into the transition metal catalyst layers 4. Furthermore, size reduction can be achieved by providing the PM combustion catalyst layers 3 and the transition metal catalyst layers 4 in the same filter 2, resulting in further cost reduction.

Furthermore, each PM combustion catalyst layer 3 and each transition metal catalyst layer 4 are provided on the internal walls of the adjoining cells in the single filter 2 in order to reduce heat loss therebetween. Thus, the temperature of the exhaust gas introduced into the transition metal catalyst layers 4 can be stably elevated by the PM combustion catalyst layers 3. This enhances the advantageous effects of the temperature rise of the transition metal catalyst layers 4 and improves the exhaust cleanup efficiency due to a reduction in slip gas. Two different catalysts layers, i.e., a PM combustion catalyst layer 3 and a transition metal catalyst layer 4 are provided in separate cells. This results in easy production and further cost reduction of the filter 2.

The PM combustion catalyst layers 3 and the transition metal catalyst layers 4 formed inside the inlet cells 2a and the outlet cells 2b adjoining each other facilitate efficient transmission of heat generated in the PM combustion catalyst layers 3 to the transition metal catalyst layers 4 through the cell walls 2a.

Furthermore, the PM combustion catalyst layers 3 are laminar coating layers on the internal walls of the inlet cells 2a in the DPF 1. Thus, the DPF 1 has a large area in contact with the particulate matter compared to the case where the PM combustion catalyst layers 3 are perfused into the cell walls 2c. This can effectively elevate the exhaust temperature. In addition, the exhaust gas at elevated temperature can be introduced into the transition metal catalyst layers 4, and thus, the exhaust gas can be more effectively cleaned up.

Since the transition metal catalyst layers 4 include the catalyst containing the transition metal such as elemental iron or an iron compound, the exhaust-cleanup system can be provided at low cost, while exhibiting the sufficient oxidation activity to the high-temperature exhaust gas heated by the PM combustion catalyst layers 3. This further reduces the cost.

### 3. Variations

Regardless of the above-described device, various modifications and combinations may occur without departing from the scope of the invention as defined by the appended claims. Configurations of the embodiment may be sorted out as appropriate.

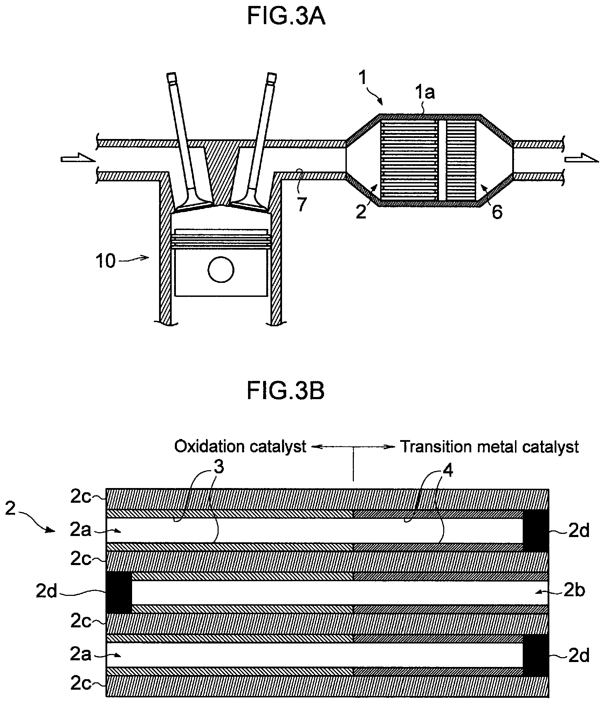

In the device described above, the PM combustion catalyst layers 3 and the transition metal catalyst layers 4 are provided in the single filter 2. These catalyst layers may be physically separated. For example, as illustrated in FIG. 3A, a catalyst unit 6 may be provided separately from a filter 2 including a PM combustion catalyst layers 3, and a transition metal catalyst layers 4 are_provided in the catalyst unit 6. Since the function of the transition metal catalyst can be separated from the filter 2, the flexibility in layout designing for the exhaust-cleanup system can be enhanced. In addition, since the transition metal catalyst layers 4 are provided separately from the filter 2, the catalyst unit 6 can be readily applied to an existing filter 2 provided with PM combustion catalyst layers 3.

In the device described above, the PM combustion catalyst layers 3 and the transition metal catalyst layers 4 are provided in different cells. However, according to the invention these catalyst layers may be provided in the same cells. For example, as illustrated in FIG. 3B, the entire filter 2 is divided into two segments, i.e., the exhaust upstream segment and the exhaust downstream segment, and the PM combustion catalyst layers 3 are disposed on the surfaces of the cell walls 2c included in the upstream segment, and the transition metal catalyst layers 4 are disposed on the cell walls 2c included in the downstream segment. In such a configuration, the heat generated in the PM combustion catalyst layers 3 also moves toward the exhaust downstream segment, and thus, the same advantageous effects as that of the above-described device can be achieved. Furthermore, two different catalyst layers are provided corresponding to positions on the filter 2 without distinguishing the cells. This facilitates production of the filter 2 compared to the above-described embodiment. Specifically, this configuration is preferred for producing the filter 2 using an impregnation process.

Furthermore, boundaries between the PM combustion catalyst layers 3 and the transition metal catalyst layers 4 can be determined depending on the temperature distribution in the filter 2. That is, the PM combustion catalyst layers 3 are provided at a position where the exhaust gas at relatively low temperature flows, whereas the transition metal catalyst layers 4 are provided at a position where the exhaust gas at high temperature elevated by the oxidation reaction in the PM combustion catalyst layers 3 flows.

The boundary between the PM combustion catalyst layer 3 and the transition metal catalyst layer 4 in each cell is set to a position corresponding to an isothermal line, and thus, the heat generated in the PM combustion catalyst layer 3 can evenly dissipate to the transit metal catalyst layer 4, and the exhaust-cleanup efficiency can be further improved.

The engine can have any combustion system and the above-described exhaust emission control device can be applied to both an exhaust system of a diesel engine and an exhaust system of a gasoline engine.

### REFERENCE SIGNS LIST

- 1: DPF (filtering device, Diesel Particulate Filter assembly)
- 2: filter
- 2a: inlet cell
- 2b: outlet cell
- 3: PM combustion catalyst layer (oxidation catalyst zone)
- 4: transition metal catalyst layer (transition metal catalyst zone)

The invention thus described, it will be obvious that the same may be varied in many ways as defined by the following claims.

## Claims

1. An exhaust emission control device, comprising:
a filter (2) provided in an exhaust path from an engine, divided into an upstream segment and a downstream segment, and that collects particulate matter in exhaust gas;
an oxidation catalyst zone (3) disposed inside the filter (2) and containing a catalyst having oxidation activity to the particulate matter;
a transition metal catalyst zone (4) provided downstream of an exhaust gas flow relative to the oxidation catalyst zone (3) and including a catalyst containing a transition metal catalyst;
a PM combustion catalyst layer (3) disposed in the upstream segment as the oxidation catalyst zone (3); and
a transition metal catalyst layer (4) disposed in the downstream segment as the transition metal catalyst zone (4); wherein
the filter (2) includes an inlet cell (2a) opened toward upstream of the exhaust gas flow and an outlet cell (2b) opened toward the downstream of the exhaust gas flow, and
the oxidation catalyst zone (3) and the transition metal catalyst zone (4) are provided in the respective cells, **characterized in that**
the two different catalyst layers (3, 4) are provided corresponding to positions on the filter (2) without distinguishing the cells and **in that**
a boundary between the PM combustion catalyst layer (3) being a noble metal catalyst and the transition metal catalyst layer (4) in each cell is set to a position corresponding to an isothermal line.

2. The exhaust emission control device according to Claim 1, wherein
the transition metal catalyst zone (4) contains a catalyst containing elemental iron or an iron compound.

3. The exhaust emission control device according to Claim 1 or 2, wherein
the PM combustion catalyst layer (3) contains a catalyst having higher oxidation activity than a catalyst contained in the transition metal catalyst layer (4), and
the PM combustion catalyst layer (3) includes at least any one of noble metal catalysts, ceria-based oxidation catalysts, and perovskite oxidation catalysts.

## Patentansprüche

1. Abgasemissionssteuervorrichtung, die aufweist:
ein Filter (2), das in einem Abgasweg von einem Verbrennungsmotor bereitgestellt ist, welches in ein strömungsaufwärtiges Segment und ein strömungsabwärtiges Segment unterteilt ist und das partikelförmige Materie im Abgas sammelt;
eine Oxidationskatalysatorzone (3), die im Inneren des Filters (2) angeordnet ist und einen Katalysator mit Oxidationsaktivität gegenüber der partikelförmigen Materie hat;
eine Übergangsmetallkatalysatorzone (4), die strömungsabwärtig von einer Abgasströmung relativ zu der Oxidationskatalysatorzone (3) vorgesehen ist und einen Katalysator umfasst, der einen Übergangsmetallkatalysator enthält;
eine PM-Verbrennungskatalysatorschicht (3), die in dem strömungsaufwärtigen Segment als die Oxidationskatalysatorzone (3) angeordnet ist; und
eine Übergangsmetallkatalysatorschicht (4), die in dem strömungsabwärtigen Segment als die Übergangsmetallkatalysatorzone (4) angeordnet ist; wobei
das Filter (2) aufweist: eine Einlasszelle (2a), die zur strömungsaufwärtigen Richtung der Abgasströmung geöffnet ist, und eine Auslasszelle (2b), die zur strömungsabwärtigen Richtung der Abgasströmung geöffnet ist, und
die Oxidationskatalysatorzone (3) und die Übergangsmetallkatalysatorzone (4) in den jeweiligen Zellen bereitgesellt sind, **dadurch gekennzeichnet, dass**
die zwei unterschiedlichen Katalysatorschichten (3, 4) entsprechend Positionen auf dem Filter (2) bereitgestellt sind, ohne die Zellen zu unterscheiden, und dass
eine Grenze zwischen der PM-Verbrennungskatalysatorschicht (3), die ein Edelmetallkatalysator ist, und der Übergangsmetallkatalysatorschicht (4) in jeder Zelle auf eine Position festgelegt ist, die einer Isotherme entspricht.

2. Abgasemissionssteuervorrichtung nach Anspruch 1, wobei
die Übergangsmetallkatalysatorzone (4) einen Katalysator enthält, der elementares Eisen oder eine Eisenverbindung enthält.

3. Abgasemissionssteuervorrichtung nach Anspruch 1 oder 2, wobei
die PM-Verbrennungskatalysatorschicht (3) einen Katalysator mit höherer Oxidationsaktivität enthält als ein Katalysator, der in der Übergangsmetallkatalysatorschicht (4) enthalten ist, und
die PM-Verbrennungskatalysatorschicht (3) Edelmetallkatalysatoren, Oxidationskatalysatoren auf Ceroxidbasis und/oder Perowskitoxidationskatalysatoren enthält.

## Revendications

1. Dispositif de contrôle d'émission d'échappement, comprenant :
un filtre (2) prévu dans un trajet d'échappement à partir d'un moteur à combustion interne, divisé en un segment amont et un segment aval, et qui collecte la matière particulaire du gaz d'échappement ;
une zone de catalyseur d'oxydation (3) disposée à l'intérieur du filtre (2) et contenant un catalyseur ayant une activité d'oxydation pour la matière particulaire ;
une zone de catalyseur à base de métal de transition (4) prévue en aval d'un écoulement de gaz d'échappement par rapport à la zone de catalyseur d'oxydation (3) et comprenant un catalyseur contenant un catalyseur à base de métal de transition ;
une couche de catalyseur de combustion de matière particulaire (3) disposée dans le segment amont en tant que zone de catalyseur d'oxydation (3) ; et
une couche de catalyseur à base de métal de transition (4) disposée dans le segment aval en tant que zone de catalyseur à base de métal de transition (4) ; dans lequel
le filtre (2) comprend une cellule d'entrée (2a) ouverte vers l'amont de l'écoulement de gaz d'échappement et une cellule de sortie (2b) ouverte vers l'aval de l'écoulement de gaz d'échappement, et
la zone de catalyseur d'oxydation (3) et la zone de catalyseur à base de métal de transition (4) sont prévues dans les cellules respectives, **caractérisé en ce que**
les deux couches de catalyseur (3, 4) différentes sont prévues en correspondance avec des positions sur le filtre (2) sans distinguer les cellules, et **en ce que**
une frontière entre la couche de catalyseur de combustion de matière particulaire (3) qui est un catalyseur à base de métal noble et la couche de catalyseur à base de métal de transition (4) dans chaque cellule est établie à une position correspondant à une ligne isotherme.

2. Dispositif de contrôle d'émission d'échappement selon la revendication 1, dans lequel
la zone de catalyseur à base de métal de transition (4) contient un catalyseur contenant du fer élémentaire ou un composé du fer.

3. Dispositif de contrôle d'émission d'échappement selon la revendication 1 ou 2, dans lequel
la couche de catalyseur de combustion de matière particulaire (3) contient un catalyseur ayant une activité d'oxydation plus élevée qu'un catalyseur contenu dans la couche de catalyseur à base de métal de transition (4), et
la couche de catalyseur de combustion de matière particulaire (3) comprend au moins l'un quelconque des catalyseurs à base de métal noble, des catalyseurs d'oxydation à base de cérium, et des catalyseurs d'oxydation à base de pérovskite.
